# FASCICULE DE BREVET EUROPEEN

(11) **EP 2 221 225 B1**
(45) Date de publication et mention de la délivrance du brevet: **24.04.2013**
(21) Numéro de dépôt: 09153360.4
(22) Date de dépôt: 20.02.2009
(51) Int. Cl.: B60T 11/30, B60T 17/22

(54) **Vis de purge, notamment pour un système de freinage hydraulique d'un véhicule automobile**
Ablassschraube, insbesondere für ein hydraulisches Bremssystem eines Kraftfahrzeugs
Bleeder screw, in particular for a hydraulic braking system of an automobile

(43) Date de publication de la demande: 25.08.2010
(73) Titulaire: LISI Automotive Rapid, 95650 Puiseux-Pontoise (FR)
(72) Inventeur: Martin, Beley, 25230 Dasle (FR); Morel, Yann, 90000 Belfort (FR); Jolicor, Joël, 25600 Vieux-Charmont (FR)
(74) Mandataire: Berger, Helmut

(56) Documents cités:
- EP-A- 0 094 459
- DE-U1-202006 011 061
- US-A- 4 470 577
- US-A- 4 979 541
- US-A- 5 560 457

## Description

L'invention concerne une vis de purge notamment pour un système de freinage hydraulique d'un véhicule automobile, adaptée pour être vissée dans un orifice pratiqué dans la paroi d'un volume contenant un liquide, tel qu'un liquide de freinage, et comprenant une partie de tête sensiblement conique d'obturation dudit orifice lorsqu'il est vissé dans ledit orifice et un canal de mise en communication de l'espace interne du récipient avec l'extérieur lorsque la vis est dévissée.

Les vis de purge de ce type, qui sont déjà connues, présentent l'inconvénient majeur qu'elles sont réalisées selon un procédé d'usinage impliquant un enlèvement et donc une perte de matière.

DE 202006 011 061 U1 et US 4 470 577 AZ divulguent des vis de purge de ce type.

L'invention a pour but de pallier cet inconvénient.

Pour atteindre ce but, la vis de purge selon l'invention est **caractérisée en ce qu**'elle se compose de deux pièces séparées, à savoir un corps principal et une pièce en forme de tête conique, qui sont réalisées selon un procédé sans enlèvement de matière et assemblées pour former une pièce monobloc.

Selon une caractéristique de l'invention, la vis de purge est **caractérisée en ce que** les deux pièces séparées sont réalisées par frappe à froid ou forgeage, lorsqu'elles sont en métal.

Selon une autre caractéristique de l'invention, la vis de purge est **caractérisée en ce que** les deux pièces séparées lorsqu'elles sont en métal, sont assemblées par soudage.

Selon encore une autre caractéristique de l'invention, la vis de purge est **caractérisée en ce que** les deux pièces sont assemblées par emmanchement axial de la pièce de tête dans le corps principal creux.

Selon encore une autre caractéristique de l'invention, la vis de purge est **caractérisée en ce que** la pièce de tête tronconique comporte au moins un canal communiquant à une extrémité avec un espace interne de l'orifice et un espace ouvert vers l'extérieur de la vis de purge, le canal annulaire étant fermé lorsque la vis est vissée dans l'orifice et en communication avec l'espace interne du volume précité lors d'un dévissage de la vis.

Selon encore une autre caractéristique de l'invention, la vis de purge est **caractérisée en ce que** le corps principal creux comporte au moins un canal de mise en communication d'un espace annulaire de l'orifice avec un espace ouvert vers l'extérieur de la vis, cet espace étant fermé lorsque la vis est vissée dans l'orifice et en communication avec l'espace interne du volume précité lors d'un desserrage de la vis.

Selon encore une autre caractéristique de l'invention, la vis de purge est **caractérisée en ce que** le corps principal creux comporte, sur sa partie extérieure, un rebord avantageusement hexagonal, d'entraînement en rotation de la vis.

Selon encore une autre caractéristique de l'invention, la vis de purge est **caractérisée en ce que** l'extrémité extérieure libre de la vis est configurée pour permettre le raccordement d'un capuchon ou d'un tuyau.

Selon encore une autre caractéristique de l'invention, la vis de purge est **caractérisée en ce qu'**au moins une des deux pièces est réalisée en matière plastique, avantageusement par injection.

Selon encore une autre caractéristique de l'invention, la vis de purge est **caractérisée en ce que** les canaux sont réalisés sous forme de gorges dans la surface extérieure de l'une des pièces séparées et deviennent des canaux ouverts seulement à leurs extrémités lors de l'assemblage des deux pièces.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue en perspective d'un étrier de frein équipé d'une vis de purge selon l'invention ;
- la figure 2 est une vue en coupe axiale d'une vis de purge selon l'invention, montée dans un étrier de frein, selon la ligne II-II de la figure 3 ; et
- la figure 3 est une vue en coupe selon la ligne III-III de la figure 2.

L'invention sera décrite ci-après, à titre d'exemple, dans son application à un système de freinage, plus précisément un étrier de frein ou un cylindre de roue.

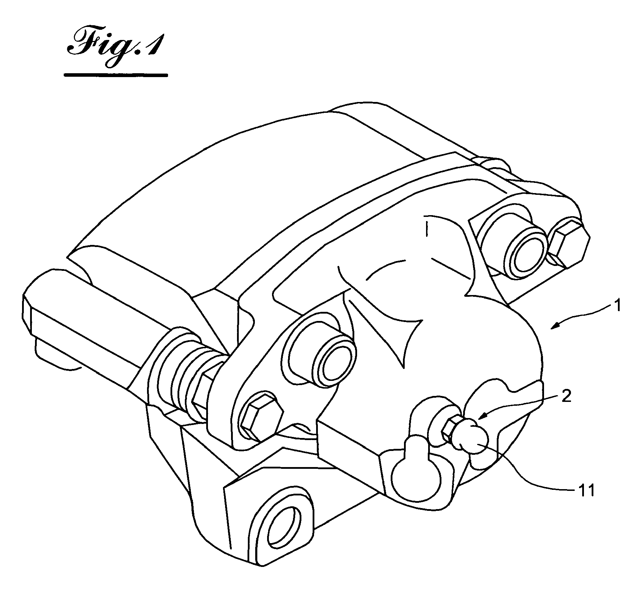

La figure 1 représente ainsi un étrier de frein 1 pourvu d'une vis de purge 2. Cette vis est mise en place dans un orifice approprié 3 pratiqué dans l'étrier et sert à purger l'air contenu dans celui-ci lors de la mise en place du liquide de frein dans le circuit de freinage en la dévissant. Elle doit aussi assurer l'étanchéité de l'étrier de frein au niveau de cet orifice.

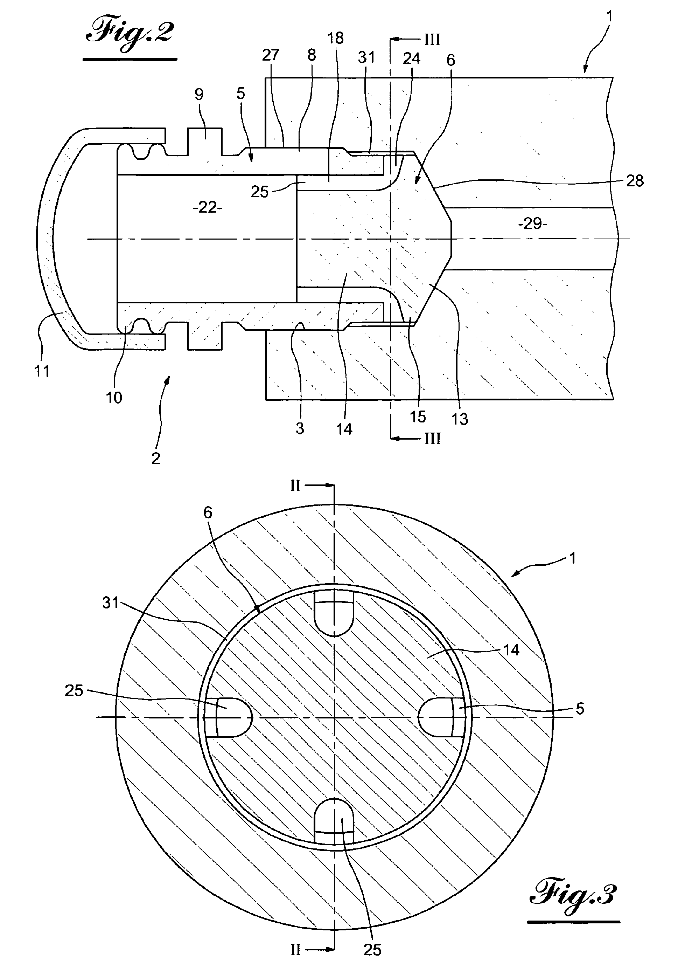

Plus précisément, comme on le voit notamment sur les figures 2 et 3, la vis de purge se compose de deux pièces séparées, à savoir un corps principal creux 5 et une pièce tronconique 6 qui est configurée pour former la tête de la vis. Les deux pièces sont assemblées, à l'état d'alignement axial, pour former une pièce monobloc, par tout moyen d'assemblage approprié connu, notamment par soudage ou par emmanchement serré de la pièce de tête 6 dans le corps creux 5.

Le corps principal 5, de configuration sensiblement cylindrique est pourvu d'un filetage 8 sur sa face cylindrique extérieure permettant le vissage de la vis dans l'orifice 3, un rebord extérieur hexagonal d'entraînement 9 et, au niveau de son extrémité extérieure libre, une partie ondulée 10 permettant le raccordement d'un capuchon 11 ou d'un tuyau (non représenté). La pièce formant tête 6 de forme générale tronconique comporte une partie avant conique 13 et une partie arrière cylindrique 14 étagée dont la portion avant présente sensiblement le même diamètre que l'extrémité avant du corps 5 et dont la portion d'extrémité a un diamètre inférieur permettant l'emmanchement axial de la pièce 6 dans le corps 5.

La vis 2 comporte une pluralité de canaux 18, dans l'exemple représenté 4, qui sont destinés à établir une communication entre l'intérieur de l'étrier de frein et l'espace interne 22 ouvert vers l'extérieur de la vis susceptible d'être fermé par le capuchon 11. Chacun des canaux 18 est coudé et comprend une partie radiale 24 débouchant dans la partie cylindrique de plus grand diamètre 14 de la pièce de tête 6 et une partie axiale 25 qui s'ouvre dans l'espace interne 22.

Concernant l'orifice 8 de l'étrier de frein, destiné à recevoir la vis 2, il comprend une partie cylindrique extérieure 27 et un fond incliné 28 dont la forme est complémentaire à la face conique de la partie de tête 6. Dans la partie centrale du fond débouche un canal 29, qui s'étend dans l'axe de l'orifice et s'ouvre dans l'espace interne de l'étrier de frein. La partie cylindrique extérieure 27 est pourvue d'un filetage interne complémentaire au filetage externe de la vis. Comme on le voit sur la figure 2, la partie cylindrique avant 15 de la tête de vis 6 et l'extrémité avant du corps principal 5 présentent un diamètre extérieur légèrement inférieur au diamètre de l'orifice de façon qu'un espace annulaire 31 soit formé dans lequel débouchent les portions radiales 24 des canaux 18.

Bien entendu, les canaux 18 peuvent aussi être réalisés à l'intérieur du corps principal.

Concernant les canaux 18, ils son réalisés sous forme de gorges dans la surface extérieure de la pièce 5 ou 6 qui les comporte.

Concernant le fonctionnement de la vis de purge selon l'invention, la partie conique avant 13 de la vis permet de boucher le canal 29 du système de freinage en serrant la vis à l'aide du rebord hexagonal d'entraînement 9 et le filetage. Par contre, lorsque la vis est légèrement dévissée, un chemin de fuite se forme entre les parties coniques de la tête de la vis et du fond 28 de l'orifice 3, à travers lequel du liquide de frein peut s'échapper et s'écouler par les canaux 18 vers l'extérieur.

La vis de purge selon l'invention présente de multiples avantages majeurs. Elle peut être utilisée pour des systèmes existants. Etant donné que les pièces de la vis sont réalisées par frappe à froid, c'est-à-dire sans usinage, il n'y a pas de perte de matière.

Bien entendu on pourrait aussi envisager de réaliser au moins une des deux pièces séparées de la vis selon l'invention, avantageusement la pièce de tête 6 en matière plastique, par exemple par injection. Dans ce cas l'assemblage se fera avantageusement par emmanchement axial de la pièce de tête 6 dans le corps principal 5.

## Revendications

1. Vis de purge notamment pour un système de freinage hydraulique d'un véhicule automobile, adaptée pour être vissée dans un orifice pratiqué dans une paroi d'un volume contenant un liquide, tel qu'un liquide de freinage, et comprenant une partie de tête sensiblement conique d'obturation dudit orifice lorsque la vis est vissée dans celui-ci, **caractérisée en ce que**:
- elle comprend au moins un canal de mise en communication de l'espace interne du volume avec l'extérieur lors de son dévissage,
- elle se compose de deux pièces séparées (5, 6), à savoir un corps principal (5) et une pièce en forme de tête conique (6), qui sont réalisées selon un procédé sans enlèvement de matière et assemblées pour former une pièce monobloc.

2. Vis de purge selon la revendication 1, **caractérisée en ce que** la pièce de tête tronconique (6) comporte au moins un canal (18) communiquant à une extrémité avec un espace interne (31) de l'orifice (3) et un espace (22) ouvert vers l'extérieur de la vis de purge, le canal annulaire (31) étant fermé lorsque la vis est vissée dans l'orifice et en communication avec l'espace interne du volume précité lors d'un dévissage de la vis.

3. vis de purge selon l'une des revendications 1 à 2, **caractérisée en ce que** le corps principal creux (5) comporte au moins un canal de mise en communication d'un espace annulaire (31) de l'orifice (3) avec un espace (22) ouvert vers l'extérieur de la vis, cet espace étant fermé lorsque la vis est vissée dans l'orifice et en communication avec l'espace interne du volume précité lors d'un desserrage de la vis.

4. Vis de purge selon l'une des revendications 1 à 3, **caractérisée en ce que** le corps principal creux (5) comporte, sur sa partie extérieure, un rebord avantageusement hexagonal, d'entraînement en rotation de la vis.

5. Vis de purge selon l'une des revendications 1 à 4, **caractérisée en ce que** l'extrémité extérieure libre (10) de la vis est configurée pour permettre le raccordement d'un capuchon (11) ou d'un tuyau.

6. Vis de purge selon l'une des revendications 2 à 5, **caractérisée en ce que** les canaux (18) sont réalisés sous forme de gorges dans la surface extérieure de l'une des pièces séparées (5, 6) et deviennent des canaux ouverts seulement à leurs extrémités lors de l'assemblage des deux pièces.

7. Vis de purge selon l'une des revendications 1 à 6, **caractérisée en ce que** les deux pièces séparées (5, 6) sont en métal et réalisées par frappe à froid au forgeage.

8. Vis de purge selon la revendication 7, **caractérisée en ce que** les deux pièces séparées (5, 6) sont assemblées par soudage.

9. Vis de purge selon l'une des revendications 1 à 6, **caractérisée en ce qu'**au moins une des deux pièces (5, 6) est réalisée en matière plastique, avantageusement par injection.

10. Vis de purge selon l'une des revendications 1 à 7 ou 9, **caractérisée en ce que** les deux pièces (5, 6) sont assemblées par emmanchement axial de la pièce de tête (6) dans le corps principal creux (5).

## Claims

1. A bleeder screw, in particular for a hydraulic braking system of a motor vehicle, suitable for being screwed into an orifice formed in a wall of a volume containing a liquid, such as a braking liquid, and comprising a substantially conical head portion covering said orifice when the screw is screwed therein, **characterized in that**:
- it comprises at least one channel placing the inner space of the volume in communication with the outside when it is unscrewed,
- it is made up of two separate parts (5, 6), i.e., a main body (5) and a part in the form of a conical head (6), which are made using a method without removing material and assembled to form a single-piece part.

2. The bleeder screw according to claim 1, **characterized in that** the tapered head part (6) includes at least one channel (18) communicating at one end with an inner space (31) of the orifice (3) and a space (22) open toward the outside of the bleeder screw, the annular channel (31) being closed when the screw is screwed into the orifice and in communication with the inner space of the aforementioned volume during unscrewing of the screw.

3. The bleeder screw according to one of claims 1 to 2, **characterized in that** the hollow main body (5) includes at least one channel for putting an annular space (31) of the orifice (3) in communication with a space (22) open toward the outside of the screw, that space being closed when the screw is screwed into the orifice and in communication with the inner space of the aforementioned volume when the screw is loosened.

4. The bleeder screw according to one of claims 1 to 3, **characterized in that** the hollow main body (5) includes, on the outer portion thereof, a rim that it is advantageously hexagonal, for rotating the screw.

5. The bleeder screw according to one of claims 1 to 4, **characterized in that** the free outer end (10) of the screw is configured to allow the connection of a cover (11) or a hose.

6. The bleeder screw according to one of claims 2 to 5, **characterized in that** the channels (18) are made in the form of grooves in the outer surface of one of the separate parts (5, 6) and become open channels only at their ends during the assembly of the two parts.

7. The bleeder screw according to one of claims 1 to 6, **characterized in that** the two separate parts (5, 6) are made from metal and are produced by cold heading during forging.

8. The bleeder screw according to claim 7, **characterized in that** the two separate parts (5, 6) are assembled by welding.

9. The bleeder screw according to one of claims 1 to 6, **characterized in that** at least one of the two parts (5, 6) is made from a plastic material, advantageously by injection.

10. The bleeder screw according to one of claims 1 to 7 or 9, **characterized in that** the two parts (5, 6) are assembled by axial fitting of the head part (6) in the hollow main body (5).

## Patentansprüche

1. Ablassschraube, insbesondere für ein hydraulisches Bremssystem eines Kraftfahrzeugs, die geeignet ist, um in eine Öffnung geschraubt zu sein, die in eine Wand eines Volumens eingearbeitet ist, das eine Flüssigkeit enthält, wie eine Bremsflüssigkeit, und einen etwa konischen Kopfteil zum Verschließen der Öffnung umfasst, wenn die Schraube in diese eingeschraubt ist, **dadurch gekennzeichnet, dass**:
- sie mindestens einen Kanal umfasst, der bei ihrem Herausschrauben den Innenraum des Volumens mit der Außenwelt in Kommunikation versetzt,
- sie sich aus zwei separaten Teilen (5, 6) zusammensetzt, nämlich einem Hauptkörper (5) und einem Teil in Form eines konischen Kopfs (6), die gemäß einem Verfahren ohne Abtragen von Material hergestellt und zusammengesetzt sind, um ein Monoblock-Teil zu bilden.

2. Ablassschraube nach Anspruch 1, **dadurch gekennzeichnet, dass** das kegelstumpfartige Kopfteil (6) mindestens einen Kanal (18) aufweist, der an einem Ende mit einem Innenraum (31) der Öffnung (3) und einem nach außen offenen Raum (22) der Ablassschraube kommuniziert, wobei der ringförmige Kanal (31) geschlossen ist, wenn die Schraube in die Öffnung geschraubt ist und bei einem Lösen der Schraube in Kommunikation mit dem Innenraum des vorgenannten Volumens ist.

3. Ablassschraube nach einem der Ansprüche 1 bis 2, **dadurch gekennzeichnet, dass** der hohle Hauptkörper (5) mindestens einen Kanal aufweist, der einen ringförmigen Raum (31) der Öffnung (3) mit einem nach außen offenen Raum (22) der Schraube in Kommunikation versetzt, wobei dieser Raum geschlossen ist, wenn die Schraube in die Öffnung geschraubt ist und bei einem Lösen der Schraube in Kommunikation mit dem Innenraum des vorgenannten Volumens ist.

4. Ablassschraube nach einem der Ansprüche 1 bis 3, **dadurch gekennzeichnet, dass** der hohle Hauptkörper (5) auf seinem äußeren Abschnitt einen in vorteilhafter Weise achteckigen Rotations-Antriebsrand der Schraube aufweist.

5. Ablassschraube nach einem der Ansprüche 1 bis 4, **dadurch gekennzeichnet, dass** das freie äußere Ende (10) der Schraube konfiguriert ist, um den Anschluss einer Kappe (11) oder eines Rohrs zu erlauben.

6. Ablassschraube nach einem der Ansprüche 2 bis 5, **dadurch gekennzeichnet, dass** die Kanäle (18) in Form von Rillen in die Außenfläche eines der separaten Teile (5, 6) eingearbeitet sind und bei der Verbindung der zwei Teile nur an ihren Enden offene Kanäle werden.

7. Ablassschraube nach einem der Ansprüche 1 bis 6, **dadurch gekennzeichnet, dass** die zwei separaten Teile (5, 6) aus Metall sind und beim Schmieden durch Kaltschlagen hergestellt sind.

8. Ablassschraube nach Anspruch 7, **dadurch gekennzeichnet, dass** die zwei separaten Teile (5, 6) durch Schweißen verbunden sind.

9. Ablassschraube nach einem der Ansprüche 1 bis 6, **dadurch gekennzeichnet, dass** mindestens eines der zwei Teile (5, 6) aus Kunststoff, vorzugsweise durch Spritzen, hergestellt ist.

10. Ablassschraube nach einem der Ansprüche 1 bis 7 oder 9, **dadurch gekennzeichnet, dass** die zwei Teile (5, 6) durch axiales Einstecken des Kopfteils (6) in den hohlen Hauptkörper (5) verbunden sind.
